# EUROPEAN PATENT SPECIFICATION

(11) **EP 3 819 896 B1**
(45) Date of publication and mention of the grant of the patent: **28.01.2026**
(21) Application number: 20206311.1
(22) Date of filing: 06.11.2020
(51) Int. Cl.: G08G 5/00, G01C 23/00

(54) **SYSTEM AND METHOD TO CHANGE SYNTHETIC VISION SYSTEM (SVS) MODE**
SYSTEM UND VERFAHREN ZUR ÄNDERUNG DES MODUS EINES SYNTHETIC-VISION-SYSTEMS (SVS)
SYSTÈME ET PROCÉDÉ POUR CHANGER DE MODE D'UN SYSTÈME DE VISION SYNTHÉTIQUE (SVS)

(30) Priority: 06.11.2019 US 201916675999
(43) Date of publication of application: 12.05.2021
(73) Proprietor: Rockwell Collins, Inc., Cedar Rapids, IA 52498 (US)
(72) Inventor: KOLESINSKI, Marcin, Central City, Iowa 52214 (US); MCCUSKER, Patrick, Walker, IA Iowa 52352 (US); DAVIS, Jason, Marengo, IA Iowa 52301 (US)
(74) Representative: Dehns

(56) References cited:
- EP-A2- 2 610 590
- ANONYMOUS: "G3X Pilot's Guide", 29 April 2019 (2019-04-29), XP055790149, Retrieved from the Internet <URL:https://static.garmin.com/pumac/190-01115-00_q.pdf> [retrieved on 20210325]

## Description

### BACKGROUND

The traditional synthetic vision system (SVS) scenery, which is used as a background for a primary flight display, provides an egocentric view of an area in front of an aircraft. This provides a relatively narrow field of view which is sufficient for take-off, flight, and landing operations, however, this view is not ideal for taxiing to a takeoff point on a runway. SVS are disclosed in EP 2 610 590 A2 and in 'G3X Pilot's Guide', 29 April 2019, XP055790149 at https:..static.garmin.com/pumac/190-01115-00_q.pdf.

### SUMMARY

In one aspect, embodiments of the inventive concepts disclosed herein are directed to a system as defined by claim 1.

In a further aspect, embodiments of the inventive concepts disclosed herein are directed to a method as defined by claim 13.

### BRIEF DESCRIPTION OF THE DRAWINGS

Implementations of the inventive concepts disclosed herein may be better understood when consideration is given to the following detailed description thereof. Such description makes reference to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a view of an exemplary embodiment of an SVS flight mode egocentric view according to the inventive concepts disclosed herein.
FIG. 2 is a view of an exemplary embodiment of an SVS taxi mode exocentric view according to the inventive concepts disclosed herein.
FIG. 3 is a view of an exemplary embodiment of an aircraft taxiing on a taxiway to a departure point on a runway according to the inventive concepts disclosed herein.
FIG. 4 is a view of an exemplary embodiment of an aircraft taxiing on a taxiway to a departure point on a runway according to the inventive concepts disclosed herein according to the inventive concepts disclosed herein.
FIG. 5 is a view of an exemplary embodiment of an aircraft taxiing on a taxiway to a departure point on a runway according to the inventive concepts disclosed herein according to the inventive concepts disclosed herein.
FIG. 6 is a view of an exemplary embodiment of an aircraft taxiing on a taxiway to a departure point on a runway according to the inventive concepts disclosed herein according to the inventive concepts disclosed herein.
FIG. 7 is a view of an exemplary embodiment of an aircraft taxiing on a taxiway to a departure point on a runway with a predetermined exclusion zone according to the inventive concepts disclosed herein.
FIG. 8 is a view of an exemplary embodiment of a system according to the inventive concepts disclosed herein.
FIG. 9 is a view of an exemplary embodiment of a display unit computing device of the system of FIG. 8 according to the inventive concepts disclosed herein.
FIG. 10 is a view of an exemplary embodiment of a computing device of the system of FIG. 8 according to the inventive concepts disclosed herein.
FIG. 11 is a diagram of an exemplary embodiment of a method according to the inventive concepts disclosed herein.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment," or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure.

Broadly, embodiments of the inventive concepts disclosed herein may be directed to a system and a method configured to display an SVS taxi mode exocentric view when an aircraft is not in a predetermined exclusion zone and to display an SVS flight mode egocentric view when the aircraft is in the predetermined exclusion zone.

Some embodiments may provide a means to determine that an aircraft is nearing the aircraft's departure runway in order to exit SVS taxi mode based on an exclusion zone. Some embodiments provide a means to appropriately minimize exiting taxi mode prematurely (e.g. on a parallel taxiway) by providing a width of the exclusion zone that is based on a width of a runway and/or a classification of the runway.

In some embodiments, a width of an exclusion zone can be sized as a function of the runway width and/or runway classification (e.g., large aircraft runway or small aircraft runway). Larger width runways are designed to handle larger aircraft. As a result, the taxiway spacing to the runway, and the holding position offsets from the runway, will generally be increased. Thus, in some embodiments, the exclusion zone width can grow as the width of the departure runway (which can be obtained from a runway database) increases. Some embodiments may minimize nuisance transitions in and out of taxi mode. Some embodiments may be configured to handle a wide range of airport configurations (smaller airports with narrow runways, to large airports with very large runways) automatically.

Advisory Circular: AC 150/5300-13A uses two parameters to classify aircraft by performance capability and physical dimensions.

The Aircraft Approach Category determines the minimum airspeed at which an aircraft can be landed safely. Small aircraft can generally be landed at much slower speeds than large aircraft which need the higher airspeed to maintain sufficient lift to remain airborne. The length of runways determines which Aircraft Approach Category can support landing operations. Small aircraft landing at lower airspeeds can utilize shorter runways for landing operations than larger aircraft landing at higher airspeeds.

The Airplane Design Group determines the physical dimensions, including wingspan, of each aircraft. Smaller aircraft with narrower wingspans require less clearance between movement areas (taxiways and runways) than larger aircraft with wider wingspans.

The regulatory authorities use these two classifications, as well as others, to design airports and determine which classes of aircraft can be supported at any given airport. Smaller airports that will not support large aircraft tend to have shorter runways and less distance between the movement areas (taxiways and runways) that will be used by the aircraft. Larger airports that will support large aircraft will have at least some long runways and will have large distances between the movement areas. Thus, large airports can support both small and large aircraft.

Some embodiments may utilize aviation-related databases, such as the ARINC 424 and/or the ARINC 816 databases, which capture two runway parameters that result from the airport design process - the length of the runway and the width of the runway. Additionally, some aviation-related databases, such as navigation databases or airport surface databases, may include additional runway classification information.

In some embodiments, a width of an exclusion zone may be determined based at least in part on a width of a runway and/or a runway classification. For example, runways intended for use by smaller aircraft (which may be present at both small and large airports) may have reduced spacing between the runway and adjacent taxiways than between runways used by larger aircraft. Large airports may have multiple runways some of which can be used by large aircraft and some of which cannot. Small aircraft generally can use all the runways at the airport.

There may be two competing goals regarding the computation of the width of the exclusion zone. First, the exclusion zone should be as narrow as possible so that the exclusion zone does not cover taxiways where the aircraft can operate and where the SVS taxi mode may be desirable. Second, the exclusion zone should be as wide as possible so that the transition between SVS taxi mode occurs early enough that the SVS may be in flight mode before entering the runway under normal taxi speeds for those cases where the aircraft taxis onto the runway without stopping at a hold line first.

In some embodiments, a computing device may be configured to look up the width of each runway from an airborne database (e.g., ARINC 424 and/or ARINC 816) and then use a configuration parameter describing the size of the current aircraft to determine the distance from the runway centerline to the edge of the exclusion zone where the edge to edge distance may be the width of the exclusion zone.

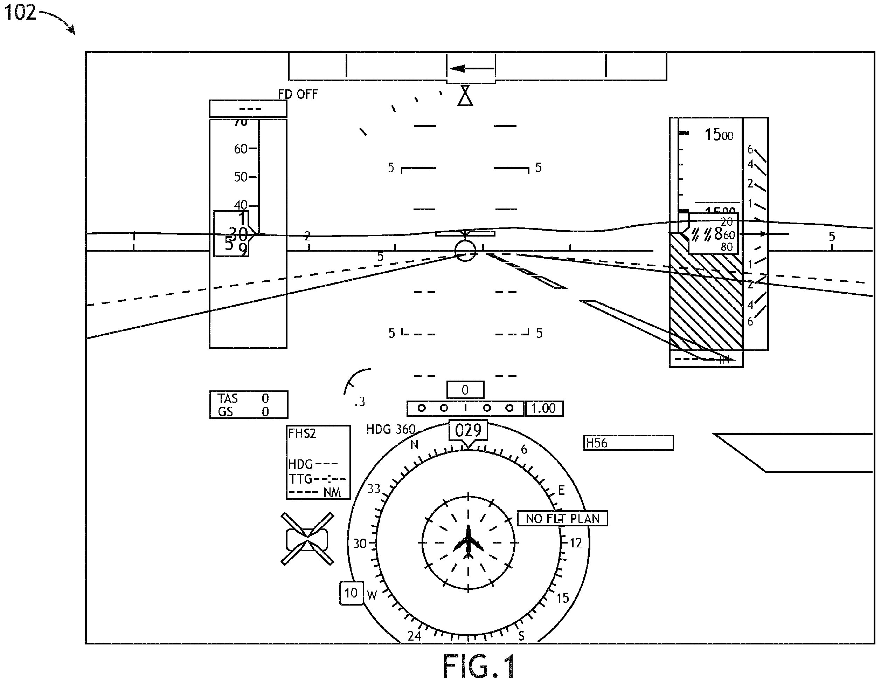

Referring now to FIG. 1, an exemplary embodiment of an SVS flight mode egocentric view 102 according to the inventive concepts disclosed herein is depicted. The SVS flight mode egocentric view 102 may be used as a background for a primary flight display (PFD) (e.g., 806 or 902) providing an egocentric view of the area in front of the aircraft (e.g., 306). The SVS flight mode egocentric view 102 may provide a relatively narrow (e.g., as compared to an SVS taxi mode exocentric view 202) field of view, which may be sufficient for take-off, flight, and landing operations. The SVS flight mode egocentric view 102 may be used during an SVS flight mode. The SVS flight mode egocentric view 102 may include primary flight display symbology.

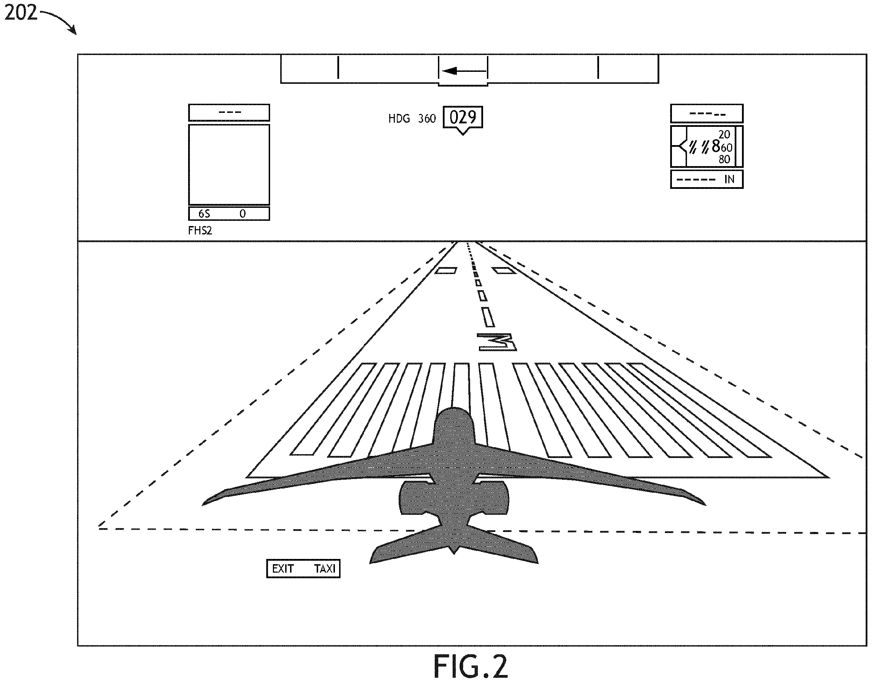

Referring now to FIG. 2, an exemplary embodiment of an SVS taxi mode exocentric view 202 according to the inventive concepts disclosed herein is depicted. The SVS taxi mode exocentric view 202 may provide a wider field of view than the SVS flight mode egocentric view 102 for use during taxi operations. The SVS taxi mode exocentric view 202 may be used during an SVS taxi mode. The SVS taxi mode exocentric view 202 may improve support for taxi operations. The SVS taxi mode exocentric view 202 may provide an exocentric view of an area surrounding the aircraft (e.g., 306). The eyepoint of the synthetic imagery for the SVS taxi mode exocentric view 202 may be above and behind the aircraft. The SVS taxi mode exocentric view 202 may expand the field of view of the synthetic scenery. The location of the aircraft (e.g., 306) within this scene may be represented by an aircraft outline projected onto the ground in the synthetic scene with the aircraft within the outline shown as transparent or translucent.

The SVS taxi mode exocentric view 202 may declutter much of the PFD symbology to emphasize the synthetic view of the world around the aircraft (e.g., 306) such that the SVS taxi mode exocentric view 202 may have less of the PFD symbology than the SVS flight mode egocentric view 102. Because of the decluttering of PFD symbology, the SVS taxi mode exocentric view 202 should only be used for taxi operations. The PFD should return to the SVS flight mode egocentric view 102 before or as the aircraft (e.g., 306) begins a take-off run. The PFD may have logic to determine when automatic transitions between Flight Mode and Taxi Mode may occur. This ensures the PFD is returned to a proper configuration prior to take-off.

A PFD format control performed by at least one processor (e.g., at least one processor 904 and/or at least one processor 1002) onboard the aircraft may provide the means to enable or disable SVS taxi mode operations (e.g., via a configuration selection of "Auto" or "Off"). The Auto selection may allow the PFD logic to determine when the PFD may show the SVS flight mode egocentric view 102 or the SVS taxi mode exocentric view 202. The Off selection may ensure that the SVS flight mode egocentric view 102 is always presented during taxi operations (within the logic that determines when SVS is operational or in a fault state). The flight crew may manually configure the PFD to SVS Taxi Mode Auto/Off via a menu selection on the PFD, via independent hardware or software control panels, or other user interfaces (e.g., an eye tracking user interface or a voice recognition system). The user interface for configuring SVS Taxi Mode Auto/Off may be designed to be selected once per flight during a normal start up routine.

In some embodiments, the SVS computing device (e.g., 810) may automatically transition from outputting the SVS taxi mode exocentric view 202 to the SVS flight mode egocentric view 102, for example, when the aircraft arrives at a hold line of a departure runway. There are several issues that may complicate this goal. First, long runways may have multiple intersections with taxi ways where the aircraft can begin the take-off run. Thus, there are many potential places where the aircraft can turn onto the runway to start the take-off run. Not all of these locations will be marked with hold lines. Some runways may have no marked hold lines at any taxiway/runway intersection. During taxi operations, the aircraft may cross one or more runways getting to the location to start the take-off run. At some airports, there may be only taxiways on one side of the runway. Thus, the aircraft may cross the departure runway to get to a taxiway that will lead to the departure point of the runway. In some cases, the aircraft may turn on to the runway and then taxi down the runway to the departure point before turning around and starting the take-off run.

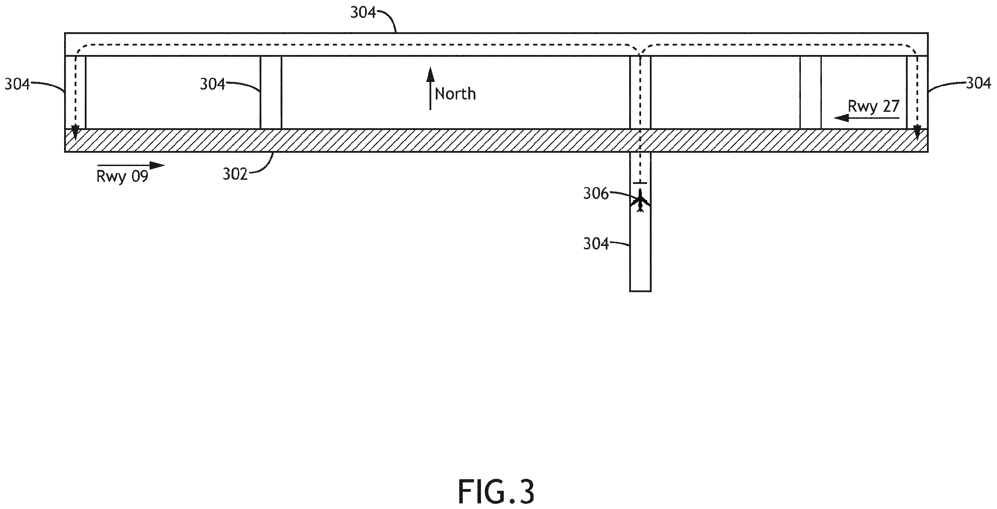

Referring now to FIG. 3, an exemplary embodiment of an aircraft 306 taxiing on a taxiway 304 to a departure point on a runway 302 according to the inventive concepts disclosed herein is depicted. In a most common scenario, the aircraft 306 may be at a hold line somewhere in the middle of the departure runway 302. The aircraft 306 may cross the runway 302 and taxi along the taxiway 304 to either end of the runway 302 to take-off. Note that any given runway 302 may be given two identifiers based on the magnetic heading the aircraft 306 is pointing down the runway. Thus, when taking off from the eastern end of the runway 302 towards the western end, the runway 302 may be identified as 27 (based on 270 degrees magnetic heading). The runway 302 may be labeled 09 (90 degrees magnetic heading) when taking off from the other direction.

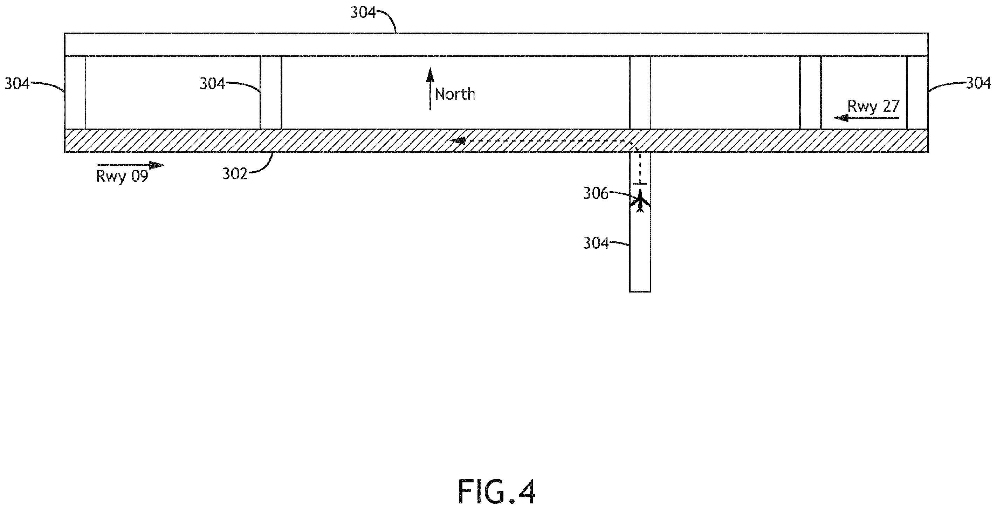

Referring now to FIG. 4, an exemplary embodiment of an aircraft 306 taxiing on a taxiway 304 to a departure point on a runway 302 according to the inventive concepts disclosed herein is depicted. FIG. 4 shows a scenario which is not that uncommon with business jets. Business jets typically have higher thrust to weight ratios than air transport jet and require less available runway distance to complete the take-off. Thus, the business jet can enter the runway 302 at some mid-point and take off.

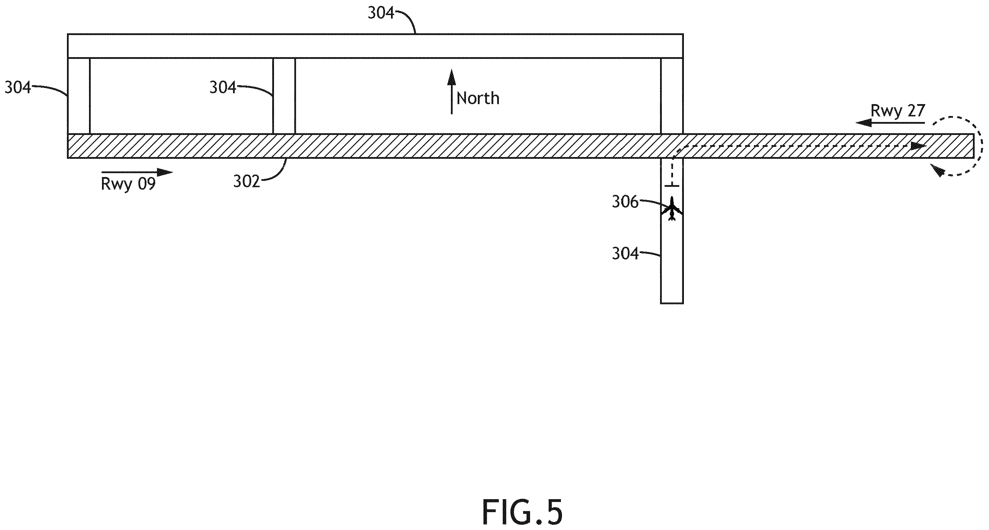

Referring now to FIG. 5, an exemplary embodiment of an aircraft 306 taxiing on a taxiway 304 to a departure point on a runway 302 according to the inventive concepts disclosed herein is depicted. FIG. 5 shows a scenario that often occurs at small airports where the taxiways 304 do not go the full length of the runway 302. In this case, the aircraft 306 may enter the runway 302 and turn the opposite direction of the intended take off. The aircraft taxies to the end of the runway 302 and then turns around. From this point, the aircraft 306 performs a normal take off.

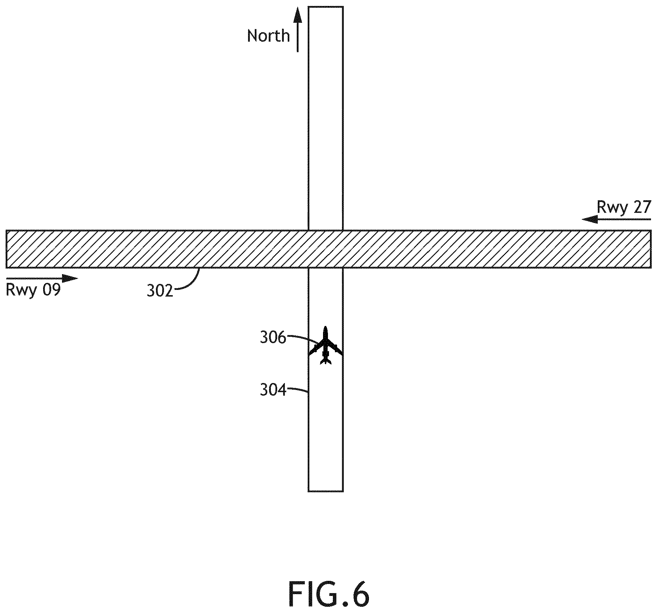

Referring now to FIG. 6, an exemplary embodiment of an aircraft 306 taxiing on a taxiway 304 to a departure point on a runway 302 according to the inventive concepts disclosed herein is depicted.

With respect to the scenario shown in FIG. 4, it may be necessary for the SVS computing device to transition from Taxi Mode to Flight Mode. In the scenarios with respect to FIGS. 3 and 5, remaining in Taxi Mode may be desirable until the aircraft 306 is at the hold lines at the end of the departing runway (first scenario depicted in FIG. 3) or as it turns around (in the third scenario in FIG. 5). The important question then is to determine the most appropriate action when the aircraft 306 is at any given hold line for the departing runway 302 or in close proximity to the runway 302 for those taxiway 304/runway 302 intersections that do not have painted hold lines.

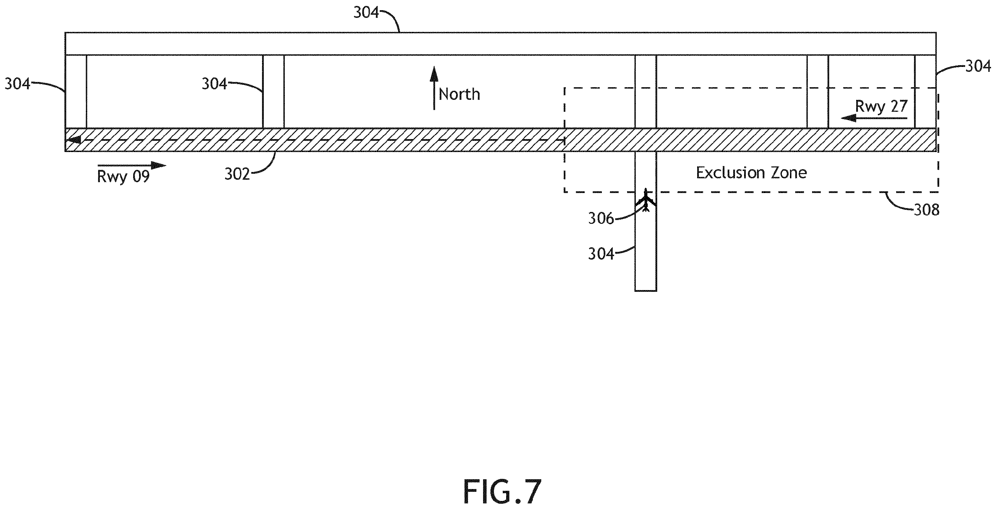

Referring now to FIG. 7, an exemplary embodiment of an aircraft 306 taxiing on a taxiway 304 to a departure point on a runway 302 with a predetermined exclusion zone 308 according to the inventive concepts disclosed herein is depicted. Some embodiments may be configured to determine (e.g., define and/or compute), by at least one processor, an exclusion zone 308, where the SVS computing device should be in flight mode regardless of other logic that may compute automatic transitions between flight mode and taxi mode. Notionally, this exclusion zone 308 may cover all of the runway surfaces from which the aircraft 306 can complete the take-off run and become airborne while leaving a margin of error at the end of the runway 302. In some embodiments, the exclusion zone 308 may include surfaces in addition to the runway, such as portions of taxiways 304. SVS flight mode may be required at all times when the aircraft 306 is in the exclusion zone 308. The exclusion zone 308 may cover a portion of the runway 302 from which the aircraft 306 can take off (e.g., portions of the runway where the remaining runway length is greater than the minimum required take-off distance from the end of the runway 302). The exclusion zone may cover an area from the runway center line where painted hold lines may exist, if present.

The minimum required take-off distance may be determined by at least one processor, as one or more of the following: defined as some fraction of runway length; defined as an aircraft-specific constant; or computed dynamically by a flight management system (FMS). The simplest calculation for the exclusion zone may be to take a fraction of the length of the runway 302 from the start of the runway 302; however, this solution may be impractical given the widely varying length of runways from which the aircraft 306 can operate. A more realistic solution may be to look at each aircraft type and determine a shortest take-off distance that can be achieved under ideal conditions. This may define the largest possible exclusion zone for any given runway and any given aircraft. However, the largest possible exclusion zone may not be the preferred exclusion zone, because it is desirable to leave the SVS in taxi mode until it should transition to flight mode. A large exclusion zone is more likely to produce nuisance transitions from taxi mode to flight mode and then back to taxi mode as the aircraft crosses the runway 302 before following a taxiway 304. This solution can be fine-tuned by looking at the state of the aircraft 306 and the environmental conditions at the time of taxi. The heavier the aircraft 306 is, the longer the distance must be to take off. Thus, an aircraft fully loaded with fuel for a long trip with a fully-populated passenger compartment needs more runway than a minimally-loaded aircraft for a short hop. Additionally, the elevation of the airport, current temperature, and current air pressure may determine minimum speed needed to lift off which in turn may determine the minimum available runway distance to take off. These calculations are already performed by the FMS and are displayed to the flight crew. By communicating the FMS calculated data to the SVS, this information can be used to determine the actual required take-off distance for the current flight. This may allow the exclusion zone 308 to be reduced to the smallest possible size which reduces the probability of nuisance transitions.

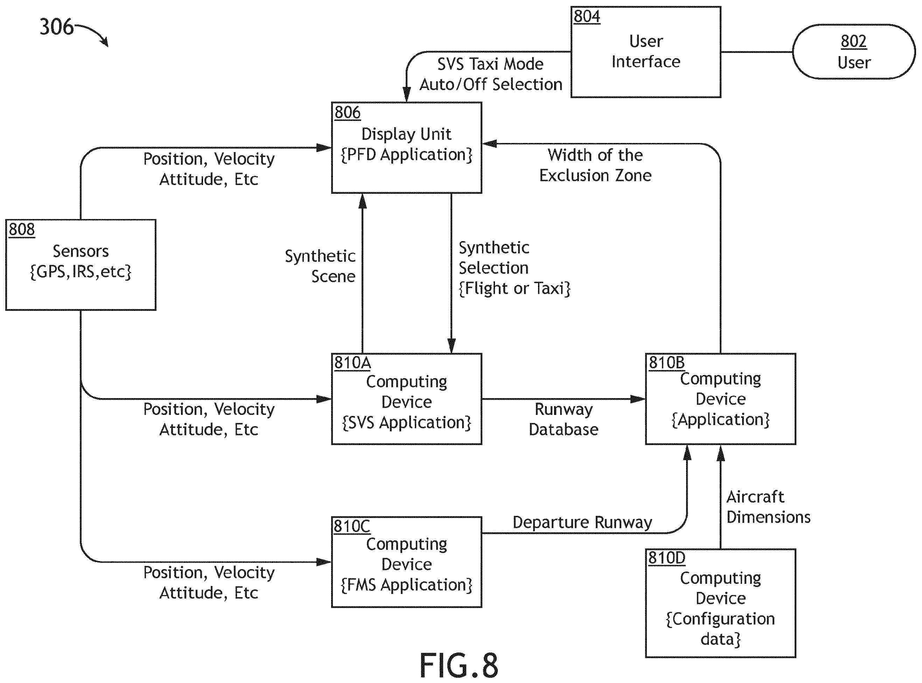

Referring now to FIG. 8-10, an exemplary embodiment of a system according to the inventive concepts disclosed herein is depicted. In some embodiments, the system may include the aircraft 306, which may include at least one user 802, at least one user interface 804, at least one display unit computing device 806, sensors 808, at least one computing device 810A, at least one computing device 810B, at least one computing device 810C, and/or at least one computing device 810D, some or all of which may be communicatively coupled at any given time. In some embodiments, the at least one display unit computing device 806, the at least one computing device 810A, the at least one computing device 810B, the at least one computing device 810C, and/or the at least one computing device 810D may be implemented as a single computing device or any number of computing devices configured to perform any or all of the operations disclosed throughout.

The user 802 may be a pilot or crew member. The user 802 may be configured to interface with the system via the user interface 804, for example, to select SVS taxi mode to be Auto or Off. The at least one user interface 804 may be implemented as any suitable user interface, such as a touchscreen (e.g., of the display unit computing device 806 and/or another display unit), a multipurpose control panel, a cursor control panel, a keyboard, a mouse, a trackpad, a button, a switch, an eye tracking system, and/or a voice recognition system. The user interface 804 may be configured to receive a user selection and to output the user selection to a computing device (e.g., the display unit computing device 806). For example, a pilot of the aircraft 306 may be able to make an auto or off selection for a SVS taxi mode, wherein the auto selection of the SVS taxi mode enables at least one processor to automatically transition between the SVS taxi mode exocentric view 202 and the SVS flight mode egocentric view 102, wherein the off selection of the SVS taxi mode enables the at least one processor to only output the SVS flight mode egocentric view 102.

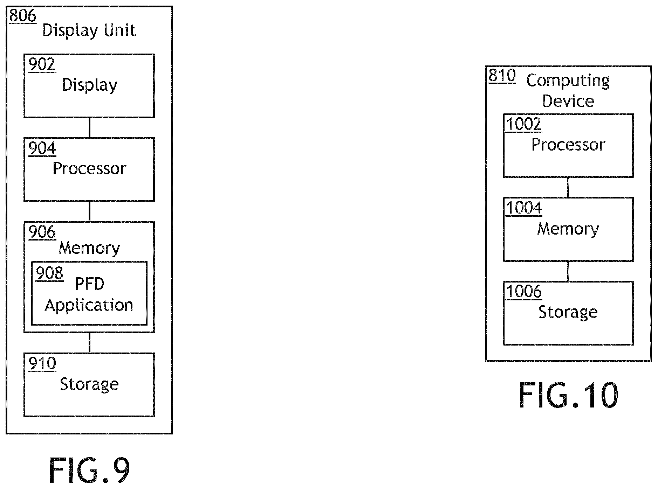

The display unit computing device 806 may be implemented as any suitable computing device, such as a PFD computing device. As shown in FIG. 9, the display unit computing device 806 may include at least one display 902, at least one processor 904, at least one memory 906, and/or storage 910, some or all of which may be communicatively coupled at any given time. The processor 904 may be configured to run various software applications (e.g., a PFD application 908) or computer code stored (e.g., maintained) in a non-transitory computer-readable medium (e.g., memory 906 and/or storage 910) and configured to execute various instructions or operations. The processor 904 may be configured to perform any or all of the operations disclosed throughout. The display 902 may be configured to: display the SVS taxi mode exocentric view 202 until the aircraft 306 is in the predetermined exclusion zone 308 and to display the SVS flight mode egocentric view 102 when the aircraft 306 is in the predetermined exclusion zone 308.

The sensors 808 may be any suitable sensors, such as at least one global positioning system (GPS) sensor, at least one inertial reference system (IRS) sensor, and/or any other sensors commonly installed in aircraft. The sensors 808 may be configured to output sensor data (e.g., position, velocity, and/or attitude) to some or all of the computing devices (e.g., 806, 810A, 810B, 810C, and/or 810D).

The computing device 810A may be implemented as any suitable computing device, such as an SVS computing device. As shown in FIG. 10, the computing device 810A may include the elements of the computing device 810 and may include at least one processor 1002, at least one memory 1004, and/or storage 1006, some or all of which may be communicatively coupled at any given time. The processor 1002 may be configured to run various software applications (e.g., an SVS application) or computer code stored (e.g., maintained) in a non-transitory computer-readable medium (e.g., memory 1004 and/or storage 1006) and configured to execute various instructions or operations. The processor 1002 of the computing device 810A may be configured to perform any or all of the operations disclosed throughout. According to the invention the processor 1002 of the computing device 810A may be configured to: output, to the at least one display 902, a synthetic vision system (SVS) taxi mode exocentric view 202 of an aircraft 306 while the aircraft 306 is performing taxi operations, while the aircraft 306 is on at least one of a taxiway 304 or a runway 302, and until the aircraft 306 is in a predetermined exclusion zone 308, the predetermined exclusion zone 308 including portions of the runway 302 where the aircraft 306 is able to begin taking off, wherein a width of the predetermined exclusion zone 308 is based at least in part on at least one of a width of the runway 302, a classification of the runway 302, or aircraft dimensions; and output, to the at least one display 902, an SVS flight mode egocentric view 102 from the aircraft 306 when the aircraft 306 is in the predetermined exclusion zone 308.

The computing device 810B may be implemented as any suitable computing device. As shown in FIG. 10, the computing device 810B may include the elements of the computing device 810 and may include at least one processor 1002, at least one memory 1004, and/or storage 1006, some or all of which may be communicatively coupled at any given time. The processor 1002 may be configured to run various software applications (e.g., an application) or computer code stored (e.g., maintained) in a non-transitory computer-readable medium (e.g., memory 1004 and/or storage 1006) and configured to execute various instructions or operations. The processor 1002 of the computing device 810B may be configured to perform any or all of the operations disclosed throughout.

The computing device 810C may be implemented as any suitable computing device, such as an FMS computing device. As shown in FIG. 10, the computing device 810C may include the elements of the computing device 810 and may include at least one processor 1002, at least one memory 1004, and/or storage 1006, some or all of which may be communicatively coupled at any given time. The processor 1002 may be configured to run various software applications (e.g., an FMS application) or computer code stored (e.g., maintained) in a non-transitory computer-readable medium (e.g., memory 1004 and/or storage 1006) and configured to execute various instructions or operations. The processor 1002 of the computing device 810C may be configured to perform any or all of the operations disclosed throughout.

The computing device 810D may be implemented as any suitable computing device. As shown in FIG. 10, the computing device 810D may include the elements of the computing device 810 and may include at least one processor 1002, at least one memory 1004, and/or storage 1006, some or all of which may be communicatively coupled at any given time. The processor 1002 may be configured to run various software applications (e.g., an application) or computer code stored (e.g., maintained) in a non-transitory computer-readable medium (e.g., memory 1004 and/or storage 1006) and configured to execute various instructions or operations. The processor 1002 of the computing device 810D may be configured to perform any or all of the operations disclosed throughout.

The at least one processor (e.g., the at least one processor 904, the at least one processor 1002 of the computing device 810A, the at least one processor 1002 of the computing device 810B, and/or the at least one processor 1002 of the computing device 810C) is configured to: output, to at least one display 902, an SVS taxi mode exocentric view 202 of an aircraft 306 while the aircraft 306 is performing taxi operations, while the aircraft 306 is on at least one of a taxiway 304 or a runway 302, and until the aircraft 306 is in a predetermined exclusion zone 308, the predetermined exclusion zone 308 including portions of the runway 302 where the aircraft 306 is able to begin taking off, wherein a width of the predetermined exclusion zone 308 may be based at least in part on at least one of a width of the runway 302, a classification of the runway 302, or aircraft dimensions; and/or output, to the at least one display 902, an SVS flight mode egocentric view 102 from the aircraft 306 when the aircraft 306 is in the predetermined exclusion zone 308.

For example, the at least one processor 904 (e.g., at least one PFD processor) of the display unit computing device 806 may be configured to execute a PFD application 908. The processor 908 may further be configured to: receive sensor data from the sensors 808; receive an auto or off selection from the user interface 804 for a SVS taxi mode; receive a location (e.g., including a width) of the predetermined exclusion zone 308 from the processor 1002 of the computing device 810B; output a scene selection to at least one SVS processor instructing the SVS processor to generate the SVS taxi mode exocentric view 202 or the SVS flight mode egocentric view 102, and receive the SVS taxi mode exocentric view 202 or the SVS flight mode egocentric view 102 from the at least one SVS processor.

For example, the at least one processor 1002 (e.g., at least one SVS processor) of the computing device 810A (e.g., an SVS computing device) may be configured to execute an SVS application. The processor 1002 (e.g., an SVS processor) may further be configured to: receive sensor data from the sensors 808; receive the scene selection from the at least one PFD processor 904; output the SVS taxi mode exocentric view 202 or the SVS flight mode egocentric view 102 to the at least one PFD processor 904; and output a runway database to the processor 1002 of the computing device 810B.

For example, the at least one processor 1002 (e.g., at least one FMS processor) of the computing device 810C (e.g., an FMS computing device) may be configured to execute an FMS application. The processor 1002 (e.g., an FMS processor) may further be configured to: receive sensor data from the sensors 808; output departure runway information to the processor 1002 of the computing device 810B; and output a minimum required takeoff distance to the processor 1002 of the computing device 810B.

For example, the at least one processor 1002 of the computing device 810D may be configured to execute a configuration data application. The processor 1002 may further be configured to: output aircraft configuration data (e.g., including information of aircraft dimensions) to the processor 1002 of the computing device 810B.

For example, the at least one processor 1002 of the computing device 810B may be configured to execute an application. The processor 1002 may further be configured to: receive the runway database from the at least one SVS processor; receive the departure runway information from the at least one FMS processor; receive the minimum required takeoff distance from the at least one FMS processor; receive the aircraft configuration data (e.g., including information of aircraft dimensions) from the processor 1002 of the computing device 810D; determine a location (e.g., including a width) of an exclusion zone 308 resulting in the predetermined exclusion zone 308 based at least in part on at least one of a width of the runway 302, a classification of the runway 302, or aircraft dimensions; and output a location (e.g., including a width) of the predetermined exclusion zone 308 to the at least one PFD processor.

In some embodiments, an FMS may output a departure runway from a flight plan to an application of the computing device 810B that determines a width of an exclusion zone 308. The computing device 810B may retrieve aircraft dimensions from a configuration data file maintained by the computing device 810D. An SVS may output a runway database (e.g., in full or in part based on a current aircraft location) to the application of the computing device 810B that determines the width of the exclusion zone 308. The application of the computing device 810B may determine the width of the exclusion zone 308 for the departure runway 302 and output the exclusion zone 308 to a PFD (e.g., display unit 806). A user 802 may enable the SVS taxi mode via an Auto/Off selection in the PFD. The PFD may determine the aircraft's 306 position using sensor data. The PFD may use the width of the exclusion zone 308 and a current aircraft position to determine a scene selection indicating whether the SVS should be in flight mode or taxi mode. The PFD may output the scene selection to the SVS. The SVS may generate a synthetic scene (e.g., the SVS taxi mode exocentric view 202 or the SVS flight mode egocentric view 102) and output the synthetic scene to the PFD for presentation on the display 902.

At least one processor (e.g., the at least one processor 904, the at least one processor 1002 of the computing device 810A, the at least one processor 1002 of the computing device 810B, the at least one processor 1002 of the computing device 810C, and/or the at least one processor 1002 of the computing device 810D) of the aircraft 306 may be configured to perform (e.g., collectively perform) any or all of the operations disclosed throughout.

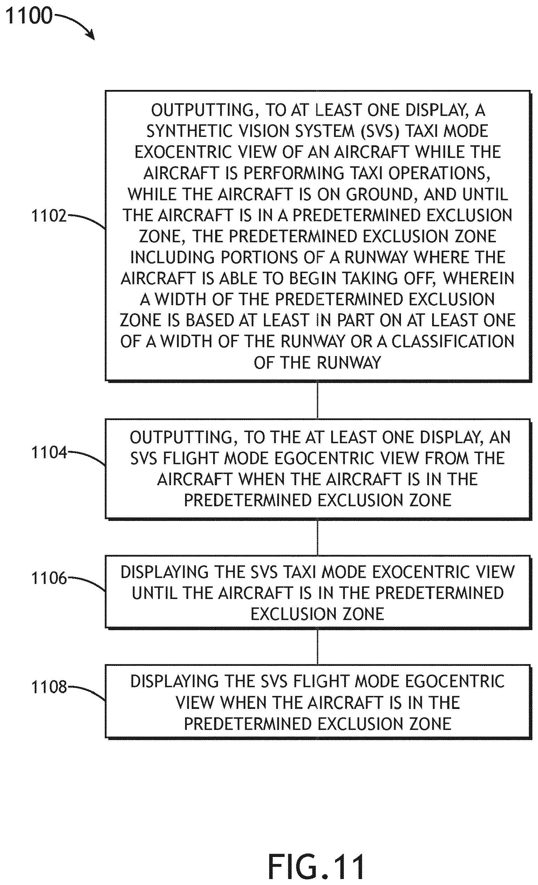

Referring now to FIG. 11, an exemplary embodiment of a method 1100 according to the inventive concepts disclosed herein may include one or more of the following steps. Additionally, for example, some embodiments may include performing one or more instances of the method 1100 iteratively, concurrently, and/or sequentially. Additionally, for example, at least some of the steps of the method 1100 may be performed in parallel and/or concurrently. Additionally, in some embodiments, at least some of the steps of the method 1100 may be performed non-sequentially.

A step 1102 may include outputting, to at least one display, a synthetic vision system (SVS) taxi mode exocentric view of an aircraft while the aircraft is performing taxi operations, while the aircraft is on at least one of a taxiway or a runway, and until the aircraft is in a predetermined exclusion zone, the predetermined exclusion zone including portions of the runway where the aircraft is able to begin taking off, wherein a width of the predetermined exclusion zone is based at least in part on at least one of a width of the runway or a classification of the runway.

A step 1104 may include outputting, to the at least one display, an SVS flight mode egocentric view from the aircraft when the aircraft is in the predetermined exclusion zone.

A step 1106 may include displaying the SVS taxi mode exocentric view until the aircraft is in the predetermined exclusion zone.

A step 1108 may include displaying the SVS flight mode egocentric view when the aircraft is in the predetermined exclusion zone.

Further, the method 1100 may include any of the operations disclosed throughout.

As will be appreciated from the above, embodiments of the inventive concepts disclosed herein may be directed to a system and a method configured to display an SVS taxi mode exocentric view when an aircraft is not in a predetermined exclusion zone and to display an SVS flight mode egocentric view when the aircraft is in the predetermined exclusion zone.

As used throughout and as would be appreciated by those skilled in the art, "at least one non-transitory computer-readable medium" may refer to as at least one non-transitory computer-readable medium (e.g., memory 906, memory 1004, storage 910, and/or storage 1006; e.g., at least one computer-readable medium implemented as hardware; e.g., at least one non-transitory processor-readable medium, at least one memory (e.g., at least one nonvolatile memory, at least one volatile memory, or a combination thereof; e.g., at least one random-access memory, at least one flash memory, at least one read-only memory (ROM) (e.g., at least one electrically erasable programmable read-only memory (EEPROM)), at least one on-processor memory (e.g., at least one on-processor cache, at least one on-processor buffer, at least one on-processor flash memory, at least one on-processor EEPROM, or a combination thereof), or a combination thereof), at least one storage device (e.g., at least one hard-disk drive, at least one tape drive, at least one solid-state drive, at least one flash drive, at least one readable and/or writable disk of at least one optical drive configured to read from and/or write to the at least one readable and/or writable disk, or a combination thereof), or a combination thereof).

As used throughout, "at least one" means one or a plurality of; for example, "at least one" may comprise one, two, three, ..., one hundred, or more. Similarly, as used throughout, "one or more" means one or a plurality of; for example, "one or more" may comprise one, two, three, ..., one hundred, or more. Further, as used throughout, "zero or more" means zero, one, or a plurality of; for example, "zero or more" may comprise zero, one, two, three, ..., one hundred, or more.

From the above description, it is clear that the inventive concepts disclosed herein are well adapted to carry out the objects and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the scope of the invention as defined by the claims.

## Claims

1. A system, comprising:
at least one display (902); and
at least one processor (904) communicatively coupled to the display, the at least one processor configured to:
receive a runway database from at least one synthetic vision system, SVS, processor;
receive departure runway information for an aircraft from at least one flight management system, FMS, processor;
receive a minimum required takeoff distance for the aircraft on a runway;
receive aircraft configuration data including information of aircraft dimensions of the aircraft from a processor of a computing device (810D);
determine a location including a width of an exclusion zone (308) resulting in a predetermined exclusion zone (308) based at least in part on the aircraft dimensions and at least one of a width of the runway (302) or a classification of a runway (302);
output, to the at least one display, a synthetic vision system, SVS, taxi mode exocentric view (102) of the aircraft while the aircraft is performing taxi operations, while the aircraft is on ground, and when the aircraft is not in a predetermined exclusion zone, the predetermined exclusion zone including portions of a runway where the aircraft is able to begin taking off based at least in part on the aircraft dimensions and at least one of the width of the runway (302) or the classification of a runway (302), wherein a width of the predetermined exclusion zone is based at least in part on the aircraft dimensions of the aircraft and at least one of the width of the runway or the classification of the runway; and
output, to the at least one display, an SVS flight mode egocentric view from the aircraft when the aircraft is in the predetermined exclusion zone,
wherein the at least one display is configured to display the SVS taxi mode exocentric view until the aircraft is in the predetermined exclusion zone and to display the SVS flight mode egocentric view when the aircraft is in the predetermined exclusion zone,
wherein the system includes a user interface (804) configured to receive a pilot selection including an auto selection for a SVS taxi mode,
wherein the auto selection of the SVS taxi mode enables the at least one processor to automatically transition between the SVS taxi mode exocentric view and the SVS flight mode egocentric view;
wherein when in an SVS taxi mode, the at least one processor is configured to automatically transition between the SVS taxi mode exocentric view and the SVS flight mode egocentric view in response to the aircraft being in the predetermined exclusion zone.

2. The system of claim 1, wherein the width of the predetermined exclusion zone is based at least in part on the width of the runway.

3. The system of claim 1 or 2, wherein the width of the predetermined exclusion zone is based at least in part on the classification of the runway.

4. The system of any preceding claim, wherein the SVS taxi mode exocentric view has an eyepoint above and behind the aircraft.

5. The system of claim 4, wherein the SVS taxi mode exocentric view includes a depiction of the aircraft.

6. The system of any preceding claim, wherein the SVS flight mode egocentric view includes primary flight display symbology.

7. The system of claim 6, wherein the SVS taxi mode exocentric view has less of the primary flight display symbology than the SVS flight mode egocentric view.

8. The system of any preceding claim, wherein the at least one processor comprises: at least one primary flight display, PFD, processor (904) configured to execute a PFD application, at least one SVS processor configured to execute an SVS application, at least one flight management system, FMS, processor (1002) configured to execute an FMS application, and at least one other processor configured to execute an application.

9. The system of claim 8, wherein the at least one PFD processor is further configured to: receive sensor data from sensors; receive an auto or off selection for a SVS taxi mode; receive a location including a width of the predetermined exclusion zone from the at least one other processor; output a scene selection to the at least one SVS processor instructing the SVS processor to generate the SVS taxi mode exocentric view or the SVS flight mode egocentric view; and receive the SVS taxi mode exocentric view or the SVS flight mode egocentric view from the at least one SVS processor.

10. The system of claim 9, wherein the at least one SVS processor is further configured to: receive sensor data from the sensors; receive the scene selection from the at least one PFD processor; output the SVS taxi mode exocentric view or the SVS flight mode egocentric view to the at least one PFD processor; and output a runway database to the at least one other processor.

11. The system of claim 10, wherein the at least one FMS processor is further configured to: receive sensor data from the sensors; and output departure runway information to the at least one other processor.

12. The system of claim 11, wherein the at least one other processor is further configured to: receive the runway database from the at least one SVS processor; receive the departure runway information from the at least one FMS processor; receive information of dimensions of the aircraft; determine an exclusion zone resulting in the predetermined exclusion zone; and output the location including the width of the predetermined exclusion zone to the at least one PFD processor.

13. A method, comprising:
receiving a runway database from at least one synthetic vision system, SVS, processor;
receiving departure runway information for an aircraft from at least one flight management system, FMS, processor;
receiving a minimum required takeoff distance for the aircraft on a runway; receiving aircraft configuration data including information of aircraft dimensions of the aircraft from a processor of a computing device (810D);
determining a location including a width of an exclusion zone (308) resulting in a predetermined exclusion zone (308) based at least in part on the aircraft dimensions and at least one of a width of the runway (302) or a classification of a runway (302); outputting, to at least one display (902), a synthetic vision system, SVS, taxi mode exocentric view (102) of the aircraft while the aircraft is performing taxi operations, while the aircraft is on ground, and when the aircraft is not in a predetermined exclusion zone, the predetermined exclusion zone including portions of a runway where the aircraft is able to begin taking off, based at least in part on the aircraft dimensions and at least one of the width of the runway (302) or the classification of a runway (302) wherein a width of the predetermined exclusion zone is based at least in part on the aircraft dimensions of the aircraft and at least one of the width of the runway or the classification of the runway;
outputting, to the at least one display, an SVS flight mode egocentric view from the aircraft when the aircraft is in the predetermined exclusion zone;
displaying the SVS taxi mode exocentric view until the aircraft is in the predetermined exclusion zone; and
displaying the SVS flight mode egocentric view when the aircraft is in the predetermined exclusion zone;
wherein a user interface receives a pilot selection including an auto selection for a SVS taxi mode,
wherein the auto selection of the SVS taxi mode enables the at least one processor to automatically transition between the SVS taxi mode exocentric view and the SVS flight mode egocentric view;
wherein when in an SVS taxi mode, the at least one processor is configured to automatically transition between the SVS taxi mode exocentric view and the SVS flight mode egocentric view in response to the aircraft being in the predetermined exclusion zone.

## Patentansprüche

1. System, umfassend:
mindestens eine Anzeige (902); und
mindestens einen Prozessor (904), der kommunikativ mit der Anzeige gekoppelt ist, wobei der mindestens eine Prozessor ausgelegt ist zum:
Empfangen einer Startbahn-Datenbank von mindestens einem Prozessor eines synthetischen Sichtsystems, SVS (synthetic vision system);
Empfangen von Abflugbahn-Informationen für ein Luftfahrzeug von mindestens einem Prozessor eines Flugmanagementsystems, FMS (flight management system);
Empfangen einer erforderlichen Mindeststartstrecke für das Luftfahrzeug auf einer Startbahn;
Empfangen von Luftfahrzeugkonfigurationsdaten, die Informationen von Luftfahrzeugabmessungen des Luftfahrzeugs beinhalten, von einem Prozessor einer Rechenvorrichtung (810D);
Bestimmen einer Position, die eine Breite einer Ausschlusszone (308) beinhaltet, was zu einer vorbestimmten Ausschlusszone (308) führt, basierend zumindest teilweise auf den Luftfahrzeugabmessungen und mindestens einer von einer Breite der Startbahn (302) oder einer Klassifizierung einer Startbahn (302);
Ausgeben, an die mindestens eine Anzeige, einer exozentrischen Ansicht (102) eines Rollmodus eines synthetischen Sichtsystems, SVS, des Luftfahrzeugs, während das Luftfahrzeug Rollvorgänge durchführt, während das Luftfahrzeug am Boden ist, und wenn das Luftfahrzeug nicht in einer vorbestimmten Ausschlusszone ist, wobei die vorbestimmte Ausschlusszone Abschnitte einer Startbahn beinhaltet, wo das Luftfahrzeug in der Lage ist, mit dem Abheben zu beginnen, basierend zumindest teilweise auf den Luftfahrzeugabmessungen und mindestens einer von der Breite der Startbahn (302) oder der Klassifizierung einer Startbahn (302), wobei eine Breite der vorbestimmten Ausschlusszone zumindest teilweise auf den Luftfahrzeugabmessungen des Luftfahrzeugs und mindestens einer von der Breite der Startbahn oder der Klassifizierung der Startbahn basiert; und
Ausgeben, an die mindestens eine Anzeige, einer egozentrischen Ansicht eines Flugmodus des SVS von dem Luftfahrzeug, wenn das Luftfahrzeug in der vorbestimmten Ausschlusszone ist,
wobei die mindestens eine Anzeige ausgelegt ist zum Anzeigen der exozentrischen Ansicht des Rollmodus des SVS, bis das Luftfahrzeug in der vorbestimmten Ausschlusszone ist, und zum Anzeigen der egozentrischen Ansicht des Flugmodus des SVS, wenn das Luftfahrzeug in der vorbestimmten Ausschlusszone ist,
wobei das System eine Benutzerschnittstelle (804) beinhaltet, die ausgelegt ist zum Empfangen einer Pilotenauswahl, die eine automatische Auswahl für einen Rollmodus des SVS beinhaltet, wobei die automatische Auswahl des Rollmodus des SVS es dem mindestens einen Prozessor ermöglicht, automatisch zwischen der exozentrischen Ansicht des Rollmodus des SVS und der egozentrischen Ansicht des Flugmodus des SVS überzugehen;
wobei, wenn in einem Rollmodus des SVS, der mindestens eine Prozessor ausgelegt ist zum automatischen Übergehen zwischen der exozentrischen Ansicht des Rollmodus des SVS und der egozentrischen Ansicht des Flugmodus des SVS als Reaktion darauf, dass das Luftfahrzeug in der vorbestimmten Ausschlusszone ist.

2. System nach Anspruch 1, wobei die Breite der vorbestimmten Ausschlusszone zumindest teilweise auf der Breite der Startbahn basiert.

3. System nach Anspruch 1 oder 2, wobei die Breite der vorbestimmten Ausschlusszone zumindest teilweise auf der Klassifizierung der Startbahn basiert.

4. System nach einem der vorhergehenden Ansprüche, wobei die exozentrische Ansicht des Rollmodus des SVS einen Augenpunkt oberhalb und hinter dem Luftfahrzeug aufweist.

5. System nach Anspruch 4, wobei die exozentrische Ansicht des Rollmodus des SVS eine Darstellung des Luftfahrzeugs beinhaltet.

6. System nach einem der vorhergehenden Ansprüche, wobei die egozentrische Ansicht des Flugmodus des SVS Symbolik eines primären Flugdisplays beinhaltet.

7. System nach Anspruch 6, wobei die exozentrische Ansicht des Rollmodus des SVS weniger von der Symbolik des primären Flugdisplays aufweist als die egozentrische Ansicht des Flugmodus des SVS.

8. System nach einem der vorhergehenden Ansprüche, wobei der mindestens eine Prozessor umfasst: mindestens einen Prozessor (904) eines primären Flugdisplays, PFD (primary flight display), der ausgelegt ist zum Ausführen einer PFD-Anwendung, mindestens einen SVS-Prozessor, der ausgelegt ist zum Ausführen einer SVS-Anwendung, mindestens einen Prozessor (1002) eines Flugmanagementsystems, FMS, der ausgelegt ist zum Ausführen einer FMS-Anwendung, und mindestens einen anderen Prozessor, der ausgelegt ist zum Ausführen einer Anwendung.

9. System nach Anspruch 8, wobei der mindestens eine PFD-Prozessor ferner ausgelegt ist zum: Empfangen von Sensordaten von Sensoren; Empfangen einer automatischen Auswahl oder Aus-Auswahl für einen Rollmodus des SVS; Empfangen einer Position, die eine Breite der vorbestimmten Ausschlusszone beinhaltet, von dem mindestens einen anderen Prozessor; Ausgeben einer Szenenauswahl an den mindestens einen SVS-Prozessor, die den SVS-Prozessor anweist, die exozentrische Ansicht des Rollmodus des SVS oder die egozentrische Ansicht des Flugmodus des SVS zu erzeugen; und Empfangen der exozentrischen Ansicht des Rollmodus des SVS oder der egozentrischen Ansicht des Flugmodus des SVS von dem mindestens einen SVS-Prozessor.

10. System nach Anspruch 9, wobei der mindestens eine SVS-Prozessor ferner ausgelegt ist zum: Empfangen von Sensordaten von den Sensoren; Empfangen der Szenenauswahl von dem mindestens einen PFD-Prozessor; Ausgeben der exozentrischen Ansicht des Rollmodus des SVS oder der egozentrischen Ansicht des Flugmodus des SVS an den mindestens einen PFD-Prozessor; und Ausgeben einer Startbahn-Datenbank an den mindestens einen anderen Prozessor.

11. System nach Anspruch 10, wobei der mindestens eine FMS-Prozessor ferner ausgelegt ist zum: Empfangen von Sensordaten von den Sensoren; und Ausgeben von Abflugbahn-Informationen an den mindestens einen anderen Prozessor.

12. System nach Anspruch 11, wobei der mindestens eine andere Prozessor ferner ausgelegt ist zum: Empfangen der Startbahn-Datenbank von dem mindestens einen SVS-Prozessor; Empfangen der Abflugbahn-Informationen von dem mindestens einen FMS-Prozessor; Empfangen von Informationen von Abmessungen des Luftfahrzeugs; Bestimmen einer Ausschlusszone, was zu der vorbestimmten Ausschlusszone führt; und Ausgeben der Position, die die Breite der vorbestimmten Ausschlusszone beinhaltet, an den mindestens einen PFD-Prozessor.

13. Verfahren, umfassend:
Empfangen einer Startbahn-Datenbank von mindestens einem Prozessor eines synthetischen Sichtsystems, SVS;
Empfangen von Abflugbahn-Informationen für ein Luftfahrzeug von mindestens einem Prozessor eines Flugmanagementsystems, FMS;
Empfangen einer erforderlichen Mindeststartstrecke für das Luftfahrzeug auf einer Startbahn;
Empfangen von Luftfahrzeugkonfigurationsdaten, die Informationen von Luftfahrzeugabmessungen des Luftfahrzeugs beinhalten, von einem Prozessor einer Rechenvorrichtung (810D);
Bestimmen einer Position, die eine Breite einer Ausschlusszone (308) beinhaltet, was zu einer vorbestimmten Ausschlusszone (308) führt, basierend zumindest teilweise auf den Luftfahrzeugabmessungen und mindestens einer von einer Breite der Startbahn (302) oder einer Klassifizierung einer Startbahn (302);
Ausgeben, an mindestens eine Anzeige (902), einer exozentrischen Ansicht (102) eines Rollmodus eines synthetischen Sichtsystems, SVS, des Luftfahrzeugs, während das Luftfahrzeug Rollvorgänge durchführt, während das Luftfahrzeug am Boden ist, und wenn das Luftfahrzeug nicht in einer vorbestimmten Ausschlusszone ist, wobei die vorbestimmte Ausschlusszone Abschnitte einer Startbahn beinhaltet, wo das Luftfahrzeug in der Lage ist, mit dem Abheben zu beginnen, basierend zumindest teilweise auf den Luftfahrzeugabmessungen und mindestens einer von der Breite der Startbahn (302) oder der Klassifizierung einer Startbahn (302), wobei eine Breite der vorbestimmten Ausschlusszone zumindest teilweise auf den Luftfahrzeugabmessungen des Luftfahrzeugs und mindestens einer von der Breite der Startbahn oder der Klassifizierung der Startbahn basiert;
Ausgeben, an die mindestens eine Anzeige, einer egozentrischen Ansicht eines Flugmodus des SVS von dem Luftfahrzeug, wenn das Luftfahrzeug in der vorbestimmten Ausschlusszone ist;
Anzeigen der exozentrischen Ansicht des Rollmodus des SVS, bis das Luftfahrzeug in der vorbestimmten Ausschlusszone ist; und Anzeigen der egozentrischen Ansicht des Flugmodus des SVS, wenn das Luftfahrzeug in der vorbestimmten Ausschlusszone ist;
wobei eine Benutzerschnittstelle eine Pilotenauswahl empfängt, die eine automatische Auswahl für einen Rollmodus des SVS beinhaltet,
wobei die automatische Auswahl des Rollmodus des SVS es dem mindestens einen Prozessor ermöglicht, automatisch zwischen der exozentrischen Ansicht des Rollmodus des SVS und der egozentrischen Ansicht des Flugmodus des SVS überzugehen; wobei, wenn in einem Rollmodus des SVS, der mindestens eine Prozessor ausgelegt ist zum automatischen Übergehen zwischen der exozentrischen Ansicht des Rollmodus des SVS und der egozentrischen Ansicht des Flugmodus des SVS als Reaktion darauf, dass das Luftfahrzeug in der vorbestimmten Ausschlusszone ist.

## Revendications

1. Système, comprenant :
au moins un écran (902) ; et
au moins un processeur (904) couplé en communication à l'écran,
l'au moins un processeur étant configuré pour :
recevoir une base de données de piste provenant d'au moins un processeur de système de vision synthétique, SVS ;
recevoir des informations de piste de départ pour un aéronef à partir d'au moins un processeur de système de gestion de vol, FMS ;
recevoir une distance de décollage requise minimale pour l'aéronef sur une piste ;
recevoir des données de configuration de l'aéronef comportant des informations sur les dimensions de l'aéronef, à partir d'un processeur d'un dispositif informatique (810D) ;
déterminer un emplacement comportant une largeur d'une zone d'exclusion (308) résultant en une zone d'exclusion (308) prédéterminée basée au moins en partie sur les dimensions de l'aéronef et au moins l'une d'une largeur de la piste (302) ou d'une classification d'une piste (302) ;
délivrer, sur l'au moins un écran, une vue exocentrique (102) en mode roulage de système de vision synthétique, SVS, de l'aéronef pendant que l'aéronef réalise des opérations de roulage, pendant que l'aéronef est au sol et lorsque l'aéronef ne se trouve pas dans une zone d'exclusion prédéterminée, la zone d'exclusion prédéterminée comportant des parties d'une piste où l'aéronef est en mesure de commencer à décoller, sur la base, au moins en partie, des dimensions de l'aéronef et d'au moins l'une de la largeur de la piste (302) ou de la classification de la piste (302), dans lequel une largeur de la zone d'exclusion prédéterminée est basée au moins en partie sur les dimensions d'aéronef de l'aéronef et au moins l'une de la largeur de la piste ou de la classification de la piste ; et
délivrer, sur l'au moins un écran, une vue égocentrique en mode vol de SVS depuis l'aéronef lorsque l'aéronef se trouve dans la zone d'exclusion prédéterminée,
dans lequel l'au moins un écran est configuré pour afficher la vue exocentrique en mode roulage de SVS jusqu'à ce que l'aéronef se trouve dans la zone d'exclusion prédéterminée et pour afficher la vue égocentrique en mode vol de SVS lorsque l'aéronef se trouve dans la zone d'exclusion prédéterminée,
dans lequel le système comporte une interface utilisateur (804) configurée pour recevoir une sélection de pilote comportant une sélection automatique pour un mode roulage de SVS,
dans lequel la sélection automatique du mode roulage de SVS permet à l'au moins un processeur de passer automatiquement de la vue exocentrique en mode roulage de SVS à la vue égocentrique en mode vol de SVS ;
dans lequel, en mode roulage de SVS, l'au moins un processeur est configuré pour passer automatiquement de la vue exocentrique en mode roulage de SVS à la vue égocentrique en mode vol de SVS en réponse à l'aéronef se trouvant dans la zone d'exclusion prédéterminée.

2. Système selon la revendication 1, dans lequel la largeur de la zone d'exclusion prédéterminée est basée au moins en partie sur la largeur de la piste.

3. Système selon la revendication 1 ou 2, dans lequel la largeur de la zone d'exclusion prédéterminée est basée au moins en partie sur la classification de la piste.

4. Système selon une quelconque revendication précédente, dans lequel la vue exocentrique en mode roulage de SVS a un point de vue au-dessus et derrière l'aéronef.

5. Système selon la revendication 4, dans lequel la vue exocentrique en mode roulage de SVS comporte une illustration de l'aéronef.

6. Système selon une quelconque revendication précédente, dans lequel la vue égocentrique en mode vol de SVS comporte une symbologie d'écran de vol primaire.

7. Système selon la revendication 6, dans lequel la vue exocentrique en mode roulage de SVS a moins de la symbologie d'écran de vol primaire que la vue égocentrique en mode vol de SVS.

8. Système selon une quelconque revendication précédente, dans lequel l'au moins un processeur comprend : au moins un processeur d'écran de vol primaire, PFD (904) configuré pour exécuter une application de PFD, au moins un processeur de SVS configuré pour exécuter une application de SVS, au moins un processeur de système de gestion de vol, FMS (1002) configuré pour exécuter une application de FMS, et au moins un autre processeur configuré pour exécuter une application.

9. Système selon la revendication 8, dans lequel l'au moins un processeur de PFD est également configuré pour : recevoir des données de capteur en provenance de capteurs ; recevoir une sélection automatique ou désactivée pour un mode roulage de SVS ; recevoir un emplacement comportant une argeur de la zone d'exclusion prédéterminée provenant de l'au moins un autre processeur ; délivrer une sélection de scène à l'au moins un processeur de SVS ordonnant au processeur de SVS de générer la vue exocentrique en mode roulage de SVS ou la vue égocentrique en mode vol de SVS ; et recevoir la vue exocentrique en mode roulage de SVS ou la vue égocentrique en mode vol de SVS à partir de l'au moins un processeur de SVS.

10. Système selon la revendication 9, dans lequel l'au moins un processeur de SVS est également configuré pour : recevoir des données de capteur en provenance des capteurs ; recevoir la sélection de scène en provenance de l'au moins un processeur de PFD ; délivrer la vue exocentrique en mode roulage de SVS ou la vue égocentrique en mode vol de SVS à l'au moins un processeur de PFD ; et délivrer une base de données de pistes à l'au moins un autre processeur.

11. Système selon la revendication 10, dans lequel l'au moins un processeur de FMS est également configuré pour : recevoir des données de capteurs provenant des capteurs ; et délivrer des informations de piste de départ à l'au moins un autre processeur.

12. Système selon la revendication 11, dans lequel l'au moins un autre processeur est également configuré pour : recevoir la base de données de pistes de l'au moins un processeur de SVS ; recevoir les informations sur la piste de départ de l'au moins un processeur de FMS ; recevoir des informations sur les dimensions de l'aéronef ; déterminer une zone d'exclusion résultant enla zone d'exclusion prédéterminée ; et délivrer l'emplacement comportant la largeur de la zone d'exclusion prédéterminée à l'au moins un processeur de PFD.

13. Procédé, comprenant :
la réception d'une base de données de pistes provenant d'au moins un processeur de système de vision synthétique, SVS ;
la réception d'informations de piste de départ pour un aéronef à partir d'au moins un processeur de système de gestion de vol, FMS ;
la réception d'une distance de décollage requise minimale pour l'aéronef sur une piste ;
la réception de données de configuration de l'aéronef comportant des informations sur les dimensions de l'aéronef, à partir d'un processeur d'un dispositif informatique (810D) ;
la détermination d'un emplacement comportant une largeur d'une zone d'exclusion (308) résultant en une zone d'exclusion (308) prédéterminée basée au moins en partie sur les dimensions de l'aéronef et au moins l'une d'une largeur de la piste (302) ou d'une classification d'une piste (302) ;
la délivrance, sur l'au moins un écran (902), d'une vue exocentrique (102) en mode roulage de système de vision synthétique, SVS, de l'aéronef pendant que l'aéronef réalise des opérations de roulage, pendant que l'aéronef est au sol et lorsque l'aéronef ne se trouve pas dans une zone d'exclusion prédéterminée, la zone d'exclusion prédéterminée comportant des parties d'une piste où l'aéronef est en mesure de commencer à décoller, sur la base, au moins en partie, des dimensions de l'aéronef et d'au moins l'une de la largeur de la piste (302) ou de la classification de la piste (302), dans lequel une largeur de la zone d'exclusion prédéterminée est basée au moins en partie sur les dimensions d'aéronef de l'aéronef et au moins l'une de la largeur de la piste ou de la classification de la piste ;
la délivrance, sur l'au moins un écran, d'une vue égocentrique en mode vol de SVS depuis l'aéronef lorsque l'aéronef se trouve dans la zone d'exclusion prédéterminée ;
l'affichage de la vue exocentrique en mode roulage de SVS jusqu'à ce que l'aéronef se trouve dans la zone d'exclusion prédéterminée ; et
l'affichage de la vue égocentrique en mode vol de SVS lorsque l'aéronef se trouve dans la zone d'exclusion prédéterminée ;
dans lequel une interface utilisateur reçoit une sélection de pilote comportant une sélection automatique pour un mode roulage de SVS,
dans lequel la sélection automatique du mode roulage de SVS permet à l'au moins un processeur de passer automatiquement de la vue exocentrique en mode roulage de SVS à la vue égocentrique en mode vol de SVS ;
dans lequel, en mode roulage de SVS, l'au moins un processeur est configuré pour passer automatiquement de la vue exocentrique en mode roulage de SVS à la vue égocentrique en mode vol de SVS en réponse à l'aéronef se trouvant dans la zone d'exclusion prédéterminée.
